# EUROPÄISCHE PATENTSCHRIFT

(11) **EP 3 283 193 B1**
(45) Veröffentlichungstag und Bekanntmachung des Hinweises auf die Patenterteilung: **09.12.2020**
(21) Anmeldenummer: 16710964.4
(22) Anmeldetag: 17.03.2016
(51) Int. Cl.: B01D 46/10, B01D 46/12, B01D 46/24, B01D 46/42, B01D 46/00

(54) **FILTERELEMENT, INSBESONDERE ZUR GASFILTRATION**
FILTER ELEMENT, IN PARTICULAR FOR GAS FILTRATION
ÉLÉMENT FILTRANT, EN PARTICULIER POUR LA FILTRATION DE GAZ

(30) Priorität: 15.04.2015 DE 102015004643
(43) Veröffentlichungstag der Anmeldung: 21.02.2018
(73) Patentinhaber: MANN+HUMMEL GmbH, 71636 Ludwigsburg (DE)
(72) Erfinder: FRITZSCHING, Torsten, 71665 Vaihingen (DE); FRANZ, Andreas, 71638 Ludwigsburg (DE); HASENFRATZ, Robert, 74523 Schwäbisch Hall (DE); BAUER, Sascha, 71549 Auenwald (DE)
(74) Vertreter: Seyboth, Matthias
(86) Internationale Anmeldenummer: PCT/EP2016/055844
(87) Internationale Veröffentlichungsnummer: WO 2016/165909

(56) Entgegenhaltungen:
- EP-A1- 0 634 299
- WO-A1-2015/055580
- DE-A1-102007 063 252
- US-A1- 2012 067 013

## Beschreibung

### Technisches Gebiet

Die Erfindung bezieht sich auf ein Filterelement, insbesondere zur Gasfiltration, nach dem Oberbegriff des Anspruches 1.

### Stand der Technik

In der DE 10 2011 083 657 A1 wird ein Filterelement für eine Frischluftanlage eines Fahrzeugs beschrieben, das zwei quaderförmige Filtermediumkörper aufweist, die an einem gemeinsamen Trägerkörper gehalten sind. Die als Faltenfilter ausgeführten Filtermediumkörper begrenzen zwischen sich einen Reinraum, aus dem die gereinigte Luft, welche die Filtermediumkörper von außen nach innen durchströmt, axial abgeleitet wird. Das Filterelement ist in Einbaulage in ein aufnehmendes Filtergehäuse eingesetzt. Hierbei ist auf eine ordnungsgemäße Montage und einen korrekten Sitz im Filtergehäuse zu achten, um Fehlfunktionen und Geräuschbelastungen durch Vibrationen zu vermeiden.

Aus US 2012/0067013 A1 ist ein Luftfilterelement mit einem Trägerkörper bekannt, der zwei V-förmig zueinander angeordnete Flachfilterbälge trägt. Das Luftfilterelement hat ferner zwei Griffe, welche in einer Gegenkontur im Gehäuse geführt und gestützt werden können, jedoch viel Bauraum beanspruchen.

### Offenbarung der Erfindung

Der Erfindung liegt die Aufgabe zugrunde, mit einfachen konstruktiven Maßnahmen ein einfach zu montierendes und in einem Filtergehäuse sicher aufzunehmendes Filterelement zu schaffen.

Diese Aufgabe wird erfindungsgemäß mit den Merkmalen des Anspruches 1 gelöst. Die Unteransprüche geben zweckmäßige Weiterbildungen an.

Das erfindungsgemäße Filterelement wird bevorzugt zur Gasfiltration eingesetzt, beispielsweise zur Filtration der Verbrennungsluft für eine Brennkraftmaschine oder zur Reinigung der Frischluft, welche Kabinen wie zum Beispiel Fahrzeuginnenräumen zugeführt wird. Das Filterelement kann aber auch zur Filtration von Flüssigkeiten eingesetzt werden.

Das Filterelement weist mindestens einen Filtermediumkörper auf, der an einem Trägerkörper angeordnet ist, wobei am Trägerkörper mindestens ein Führungselement zur Führung des Filterelementes in einem aufnehmenden Filtergehäuse angeordnet ist. Das Führungselement dient zur Führung des Filterelementes in Einschubrichtung innerhalb des aufnehmenden Filtergehäuses während der Montage. Darüber hinaus kommt dem Führungselement auch eine Haltefunktion nach dem Erreichen der Endposition im Filtergehäuse zu. Der Filtermediumkörper besteht vorteilhaft aus einem gefalteten Filtermedium. Das Filterelement ist insbesondere als Hohlelement ausgestaltet.

Das Führungselement bewirkt somit zwei Vorteile: Zum einen wird das Einschieben des Filterelements in das Filtergehäuse vereinfacht, so dass insbesondere große und verhältnismäßig schwere Filterelemente, beispielsweise für den Ansaugtrakt eines Nutzfahrzeugs, in manueller Weise und ohne Risiko des Verkantens und Verhakens des Filterelementes in das Filtergehäuse eingeführt werden können. Zum andern wird auch eine sichere und stabile Position nach Beendigung des Einschubvorganges erreicht, die während des Betriebs der Filtereinrichtung, welche das Filterelement umfasst, beibehalten wird. Vibrationen, Stöße und Schwingungen, denen die Filtereinrichtung im laufenden Betrieb ausgesetzt ist, können somit besser von dem Filterelement und dem Filtergehäuse aufgenommen werden, zugleich ist die Gefahr einer unerwünschten Geräuschentwicklung durch Relativbewegungen zwischen Filterelement und Filtergehäuse herabgesetzt.

Es kann zweckmäßig sein, dass das Führungselement mit Abstand zu dem Filtermediumkörper angeordnet ist. Dies ermöglicht die Führung zwischen dem Führungselement und dem nächstgelegenen Abschnitt des Filtermediumkörpers. In einer alternativen Ausführung kann es aber auch vorteilhaft sein, dass der Filtermediumkörper unmittelbar an das Führungselement angrenzt, wobei die Führung auf der dem Filtermediumkörper abgewandten Seite des Führungselementes erfolgt.

Gemäß einer weiteren zweckmäßigen Ausführung überragt das Führungselement den Filtermediumkörper seitlich. Diese Ausführung ermöglicht es, das Führungselement in das aufnehmende Filtergehäuse einzuschieben, wobei auf der Seite des Führungselementes ein ausreichender Abstand zwischen dem Filtermediumkörper und der Innenwand des Filtergehäuses bzw. einem Gegenführungselement an der Innenwand vorhanden ist. Gemäß einer alternativen Ausführung ist dagegen vorgesehen, dass in seitlicher, radialer Richtung das Führungselement und der Filtermediumkörper entweder sich gleich weit erstrecken oder der Filtermediumkörper weiter hinausragt als das Führungselement. In diesem Fall greift ein Gegenführungselement an der Innenwand des aufnehmenden Filtergehäuses vorteilhafterweise so weit in Richtung Filterelement ein, dass ein Kontakt zwischen dem Führungselement am Trägerkörper des Filterelements und dem Gegenführungselement an der Innenwand des Filtergehäuses ohne Behinderung durch den Filtermediumkörper besteht.

Das Führungselement ist als Führungsschiene ausgebildet, die sich annähernd oder vollständig über die Länge des Filterelementes erstreckt. Die Einschubrichtung des Filterelementes stellt zugleich die Richtung der Länge des Filterelementes dar. Die Führungsschiene erfährt zumindest im Wesentlichen während der gesamten Einschubbewegung des Filterelementes eine Abstützung am Filtergehäuse.

Es sind zwei zumindest annähernd parallel verlaufende Führungsschienen am Trägerkörper angeordnet, wodurch die Führung verbessert wird. Die Führungsschienen können entweder vollständig parallel verlaufen oder, in einer alternativen Ausführung, zueinander einen kleinen Winkel einnehmen, um beispielsweise während der Einführbewegung in das Filtergehäuse einen sich ändernden Widerstand hervorzurufen. Hierbei ist es insbesondere vorteilhaft, dass mit Annäherung an die Endposition der Widerstand zunimmt, so dass nach dem Erreichen der Filterposition durch die Reibung zwischen den Führungsschienen und einem Gegenführungselement am Filtergehäuse eine stabile Position eingenommen wird. Die Reibung zwischen Führungselement und Gegenführungselement kann auch bei einer sonstigen Ausführung des Führungselementes erreicht werden und ist nicht auf eine Führungsschiene beschränkt.

Gemäß einer nicht erfindungsgemäßen Ausführung ist das Führungselement als eine Führungslamelle ausgebildet, die sich insbesondere quer zur Längserstreckung (die Längsachse der Einschubbewegung) des Filterelementes erstreckt. Die Führungslamelle ist insbesondere U- oder C-förmig ausgebildet und wirkt nach Art einer Nut-Feder-Verbindung mit dem gehäuseseitigen Gegenführungselement zusammen. Über die Länge des Filterelementes sind insbesondere mehrere Führungslamellen am Trägerkörper vorhanden, um über die Länge eine stabile Abstützung gegenüber dem Filtergehäuse zu erreichen. Die einzelnen Führungslamellen können zueinander jeweils den gleichen Abstand aufweisen oder in verschiedenen Abständen angeordnet sein. Zweckmäßigerweise können die Führungslamellen parallel zueinander angeordnet sein. Es ist jedoch auch möglich, den Führungslamellen eine strömungsleitende Funktion zukommen zu lassen, wobei Anzahl, Design und Anordnung der Führungslamellen am Filterelement dann auf die jeweilige Anwendung abgestimmt sind.

Gemäß einer weiteren zweckmäßigen Ausführung ist der Trägerkörper als ein Stützgerüst ausgebildet, das an einer Seitenfläche des Filtermediumkörpers anliegt und diesen stützt. Das Stützgerüst mit Längs- und Quer- oder Umfangsstreben mit zwischenliegenden Ausnehmungen verleiht dem Filtermediumkörper Stabilität und befindet sich vorzugsweise an der Abström- bzw. Reinseite des Filtermediumkörpers, auch wenn grundsätzlich eine Anordnung an der Anström- bzw. Rohseite des Filtermediumkörpers möglich ist.

In einer weiteren Ausführung ist der Trägerkörper als ein Filterelementgehäuse ausgebildet, in dem der Filtermediumkörper aufgenommen ist. Das Filterelementgehäuse kann eine Strömungsleitfunktion übernehmen und ggf. einen Strömungsraum aufweisen, beispielsweise einen Reinraum zur Aufnahme des gereinigten Fluids nach Durchströmung des Filtermediumkörpers.

Gemäß einer weiteren zweckmäßigen Ausführung ist das Führungselement oder sind die Führungselemente einteilig mit dem Trägerkörper ausgebildet. Der Trägerkörper ist insbesondere als ein Kunststoffbauteil, vorzugsweise ein Spritzguss-Kunststoffbauteil ausgebildet, wobei das bzw. die Führungselemente an den Trägerkörper angespritzt werden. Es ist aber auch eine Ausführung des Führungselementes bzw. der Führungselemente separat vom Trägerkörper möglich, wobei in diesem Fall das bzw. die Führungselemente mit dem Trägerkörper fest verbunden sind.

Gemäß einer weiteren zweckmäßigen Ausführung ist der Filtermediumkörper zumindest abschnittsweise gekrümmt ausgebildet. Die Krümmung kann zur Außenseite des Filterelementes hin entweder konkav oder konvex ausgebildet sein. Des Weiteren ist es möglich, dass der Filtermediumkörper über einen ersten Abschnitt gekrümmt und über einen zweiten Abschnitt geradflächig ausgebildet ist. Es sind aber auch Ausführungen möglich, bei denen der gesamte Filtermediumkörper gekrümmt ausgebildet ist. Das Filterelement mit gekrümmten Filtermediumkörpern weist beispielsweise einen abgeflachten, näherungsweise elliptischen oder ovalen Querschnitt oder einen runden Querschnitt auf. Das Filterelement ist vorzugsweise als Hohlelement ausgeführt, d.h. das Fluid strömt vorzugsweise durch den Filtermediumkörper in einen Hohlraum des Filterelements, welcher als Reinraum dient, oder alternativ aus einem rohseitigen Hohlraum durch den Filtermediumkörper auf eine Reinseite.

An dem Trägerkörper sind zumindest zwei Filtermediumkörper angeordnet, die zwischen sich einen Strömungsraum für das Fluid begrenzen, welches durch die Filtermediumkörper geleitet wird. Der zwischenliegende Strömungsraum bildet insbesondere den Reinraum zur Aufnahme des gereinigten Fluids, das von außen nach innen durch die Filtermediumkörper geführt wird. Es ist aber auch eine Durchströmung in Gegenrichtung möglich, in der der zwischenliegende Strömungsraum den Rohraum für die Aufnahme des ungereinigten Fluids bildet, das anschließend die Filtermediumkörper von innen nach außen durchströmt. Der Strömungsraum liegt insbesondere innerhalb des Trägerkörpers und wird in einer Ausführung des Trägerkörpers als Filterelementgehäuse von Wandungen des Filterelementgehäuses begrenzt.

Das Filterelement weist beispielsweise einen zumindest annähernd ovalen Querschnitt auf. Die beiden Filtermediumkörper sind vorzugsweise an den Längsseiten des Ovals angeordnet, an den Schmalseiten des Ovals liegt eine Lücke zwischen den benachbarten Filtermediumkörpern. Es kommen aber auch Ausführungen mit runden Querschnittsformen und/oder unmittelbar aneinandergrenzenden Filtermediumkörpern in Betracht.

In einer weiteren zweckmäßigen Ausführung ist an dem Trägerkörper ein Verrastungselement angeordnet, welches zur Verrastung des Filterelementes mit dem Filtergehäuse dient. Mithilfe des Verrastungselementes kann eine formschlüssige Verrastung in der Einbaulage entgegen der Einschubrichtung erreicht werden, um zu verhindern, dass das Filterelement versehentlich, beispielsweise durch Vibrationen, sich im aufnehmenden Filtergehäuse löst.

Das Verrastungselement ist am Trägerkörper angeordnet und insbesondere einteilig mit dem Trägerkörper ausgebildet. Alternativ hierzu kann das Verrastungselement als separates Bauteil ausgeführt sein, das mit dem Trägerkörper verbunden ist.

Das Verrastungselement ist, gemäß einer weiteren zweckmäßigen Ausführung, an einem verformbaren Schnapphaken gebildet, der am Trägerkörper angeordnet ist. Der verformbare Schnapphaken erstreckt sich vorteilhafterweise in Längsrichtung des Filterelementes - entspricht der Einschubrichtung in das Filtergehäuse - und kann in Querrichtung verformt werden, um die Rastposition mit einem Gegenelement einzunehmen bzw. aus der Rastposition gelöst zu werden. Der Schnapphaken steht beispielsweise in Längsrichtung des Filterelementes über den Trägerkörper über.

Das Verrastungselement kann sich an einem verformbaren Griff befinden, der am Trägerkörper angeordnet, insbesondere einteilig mit dem Trägerkörper ausgebildet ist. An dem verformbaren Griff kann das Filterelement in das Filtergehäuse eingesetzt bzw. aus diesem entnommen werden. Um die Rastposition einzunehmen bzw. aus dieser gelöst zu werden, wird der Griff elastisch verformt, der seine Ausgangsposition wieder einnimmt, sobald äußere Kräfte wegfallen.

Eine Filtereinrichtung, die mit dem vorbeschriebenen Filterelement versehen ist, umfasst ein Filtergehäuse, das zur Aufnahme des Filterelementes dient, wobei im Filtergehäuse ein Gegenführungselement angeordnet ist, das mit dem Führungselement am Trägerkörper des Filterelements in Eingriff steht.

Auf das Filtergehäuse ist, gemäß vorteilhafter Ausführung, ein Deckel aufsetzbar. Der Deckel kann ggf. eine Sicherungsfunktion für das Verrastungselement am Trägerkörper übernehmen und dieses in seiner Verrastungsposition sichern. Bei aufgesetztem Deckel ist somit zum einen der Aufnahmeraum im Filtergehäuse zur Aufnahme des Filterelementes nach außen abgeschlossen und zum andern das Verrastungselement am Trägerkörper in seiner Verrastungsposition sicher gehalten, so dass ein versehentliches Lösen des Filterelementes im Filtergehäuse ausgeschlossen ist. Die Sicherung des Verrastungselementes in der Verrastungsposition erfolgt beispielsweise über einen Stift an der Deckelunterseite, der unmittelbar an dem Verrastungselement anliegt und hierdurch die elastische Verformung des Verrastungselementes blockiert.

De Führungselemente und ggf. auch das Verrastungselement befinden sich an gegenüberliegenden Seiten am Trägerkörper des Filterelementes.

### Kurze Beschreibung der Zeichnungen

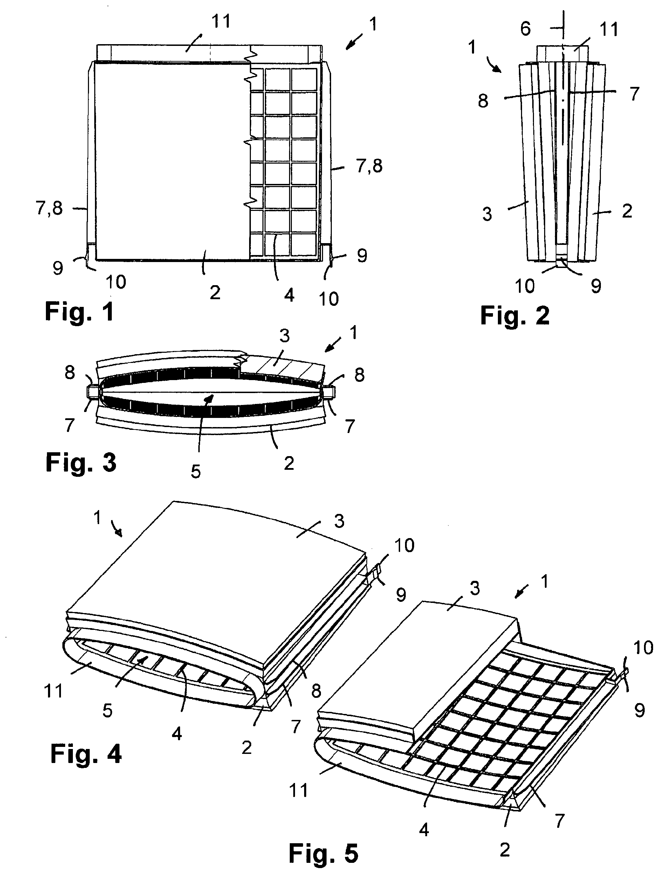

Weitere Vorteile und zweckmäßige Ausführungen sind den weiteren Ansprüchen, der Figurenbeschreibung und den Zeichnungen zu entnehmen. Es zeigen:
Fig. 1 eine Draufsicht auf ein Filterelement zur Gasfiltration, mit zwei leicht konkav gekrümmten Filtermediumkörpern an einem Trägerkörper, der an gegenüberliegenden Schmalseiten Führungsschienen zur Führung in einem aufnehmenden Filtergehäuse aufweist,
Fig. 2 das Filterelement aus Fig. 1 in einer Ansicht der Schmalseite,
Fig. 3 das Filterelement in einer Ansicht von unten,
Fig. 4 eine perspektivische Ansicht des Filterelementes,
Fig. 5 eine Fig. 4 entsprechende Darstellung des Filterelementes, teilweise geschnitten,
Fig. 6 bis Fig. 10
   eine Filtereinrichtung in Darstellungen gemäß den Fig. 1 bis 5 mit dem Filterelement in einem aufnehmenden Filtergehäuse,

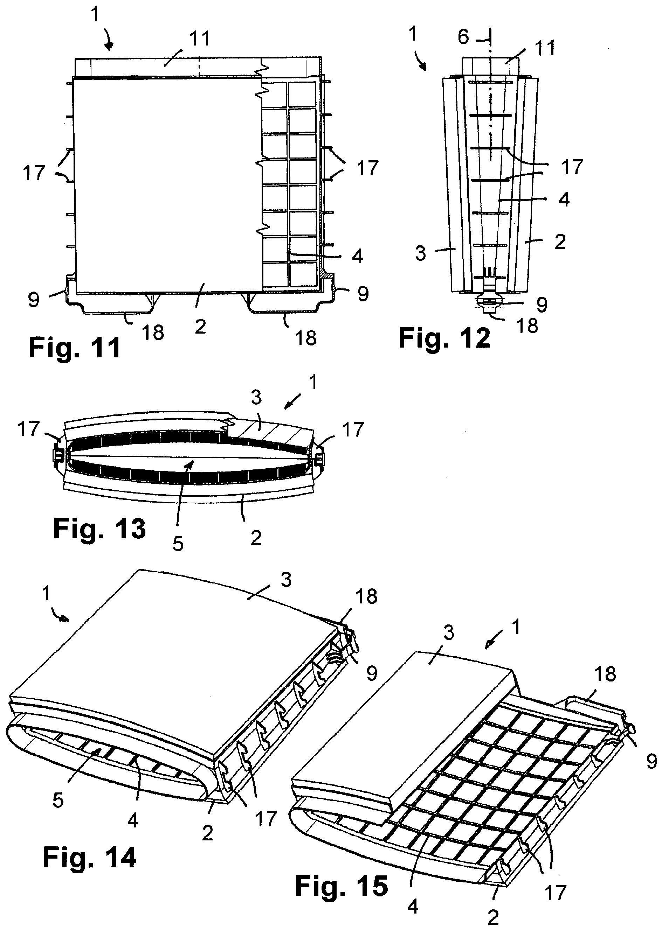

Fig. 11 bis 15 (nicht erfindungsgemäß)
   in einer Ausführungsvariante ein Filterelement mit Führungslamellen an gegenüberliegenden Schmalseiten des Trägerkörpers,

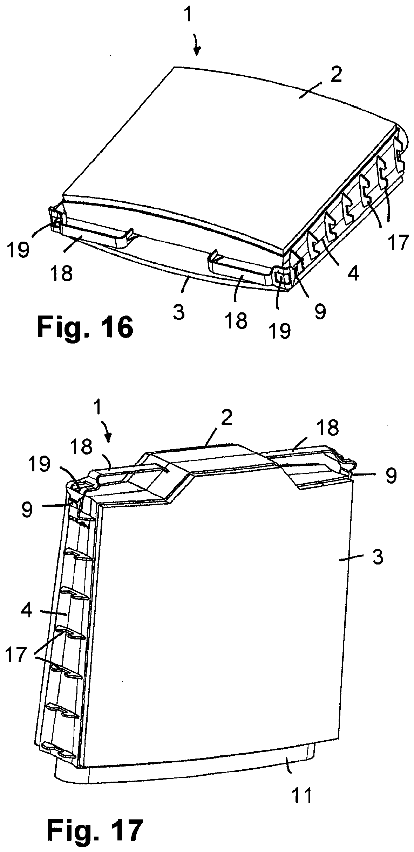

Fig. 16 (nicht erfindungsgemäß) eine perspektivische Darstellung des Filterelementes gemäß Fig. 11 bis 15,
Fig. 17 (nicht erfindungsgemäß) eine weitere perspektivische Darstellung des Filterelementes,
Fig. 18 bis 22
   (nicht erfindungsgemäß) eine Filtereinrichtung in Darstellungen gemäß den Fig. 11 bis 17 mit dem Filterelement in einem aufnehmenden Filtergehäuse,

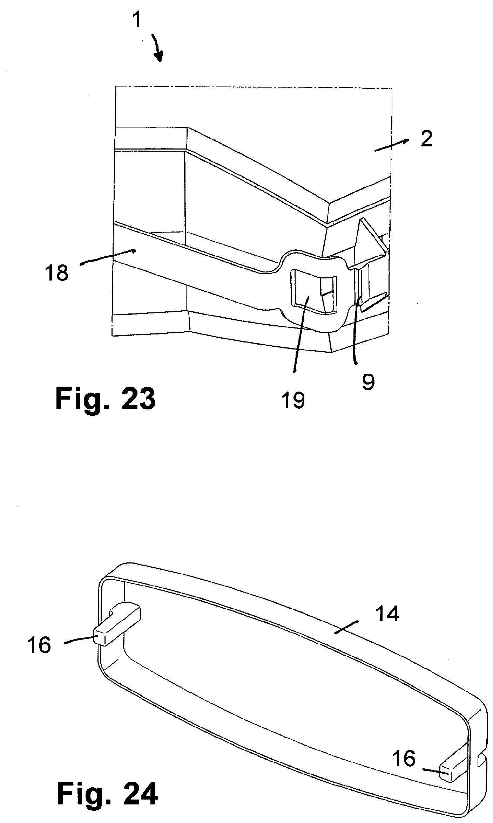

Fig. 23 (nicht erfindungsgemäß) einen Ausschnitt des Filterelements mit einem Griff am Trägerkörper,
Fig. 24 (nicht erfindungsgemäß) die Innenseite eines auf das Filtergehäuse aufsetzbaren Deckels.

In den Figuren sind gleiche Bauteile mit gleichen Bezugszeichen versehen.

### Ausführungsform(en) der Erfindung

In den Fig. 1 bis 5 ist ein erstes Ausführungsbeispiel eines Filterelementes dargestellt, das zur Gasfiltration, insbesondere zur Filtration der einer Brennkraftmaschine zuzuführenden Verbrennungsluft in einem Kraftfahrzeug oder Nutzfahrzeug eingesetzt wird. Das Filterelement 1 umfasst zwei konvex nach außen geringfügig gekrümmte Filtermediumkörper 2, 3, die an einem als Stützgerüst ausgebildeten Trägerkörper 4 angeordnet sind und einen zwischenliegenden Strömungsraum 5 im Trägerkörper 4 einschließen. Der innen liegende Strömungsraum 5 bildet den Reinraum, in welchem sich das gereinigte Fluid sammelt. Die beiden Filtermediumkörper 2 und 3 werden von außen nach innen von dem Fluid durchströmt. Die Ableitung des gereinigten Fluids aus dem Strömungsraum 5 erfolgt axial, bezogen auf die Längsachse 6 (Fig. 2).

Wie Fig. 2 zu entnehmen, erweitert sich der Querschnitt des Filterelementes 1 in Achsrichtung. Die beiden Filtermediumkörper 2 und 3 sind bezogen auf die Längsachse 6 winklig angeordnet und schließen mit der Längsachse 6 einen Winkel von etwa 10° ein. Hierdurch ergibt sich an der Unterseite und an der Oberseite des Filterelementes 1 eine unterschiedlich große Erstreckung quer zur Längsachse 6.

Der Trägerkörper 4 weist einen nicht runden, abgeflachten, einer Ellipse oder einem Oval angenäherten Querschnitt auf, wie insbesondere den Fig. 3 bis 5 zu entnehmen ist. Entsprechend besitzt auch das Filterelement 1 mit den an der Außenseite des Trägerkörpers 4 angeordneten, konvex nach außen gekrümmten Filtermediumkörpern 2 und 3, die jeweils an den Längsseiten des Trägerkörpers 4 liegen, einen nicht runden, näherungsweise elliptischen oder ovalen Querschnitt.

Im Bereich der Schmalseiten des Filterelementes 1 sind einteilig mit dem Trägerkörper 4, welcher vorzugsweise als Kunststoff-Spritzgussbauteil ausgeführt ist, Führungsschienen 7 und 8 angeordnet, die bezogen auf die Längsachse 6 in Achsrichtung verlaufen. An beiden, diametral gegenüberliegenden Schmalseiten sind jeweils zwei Führungsschienen 7, 8 angeordnet. Die Führungsschienen 7, 8 verlaufen annähernd parallel zueinander, sie nehmen, wie Fig. 2 zu entnehmen, zueinander einen kleinen Winkel ein, der kleiner als 10°, beispielsweise maximal 5° ist.

Die Führungsschienen 7 und 8 an gegenüberliegenden Schmalseiten des Trägerkörpers 4 ragen seitlich über den Trägerkörper 4 sowie über die Filtermediumkörper 2 und 3 hinaus. Die Führungsschienen 7, 8 bilden Führungselemente, über die das Filterelement an Gegenführungselementen an der Innenwand des aufnehmenden Filtergehäuses geführt und abgestützt ist. Bei der Montage wird das Filterelement 1 in das aufnehmende Filtergehäuse eingeschoben, hierbei gelangen die Führungsschienen 7, 8 in Anlage mit den Gegenführungselementen an der Innenwand des Filtergehäuses und erfahren während der Einschubbewegung eine Führung an beiden gegenüberliegenden Stirnseiten. Die Führungsschienen 7, 8 erstrecken sich annähernd über die axiale Länge des Trägerkörpers 4 und ermöglichen auf diese Weise während der gesamten Einschubbewegung eine Führung an den Gegenführungselementen im Filtergehäuse.

Der kleine Winkel, den die beiden Führungsschienen 7, 8 an einer Stirnseite zueinander einnehmen, erlaubt ein Verklemmen des Filterelementes 1 im aufnehmenden Filtergehäuse, sobald das Filterelement 1 seine endgültige Position erreicht hat. Zu Beginn der Einschubbewegung in das Filtergehäuse besteht ausreichend Spiel zwischen den Führungsschienen 7, 8 und den Gegenführungselementen an der Gehäuseinnenseite. Mit zunehmender Einschubbewegung verringert sich das Spiel bzw. erhöht sich die seitlich wirkende Kraft zwischen Führungsschienen und den Gegenführungselementen und wird entsprechend eine das Führungselement in seiner Position haltende Reibkraft aufgebaut.

An der axialen Stirnseite befindet sich, in axialer Fortsetzung der Führungsschienen 7, 8, an dem Trägerkörper 4 ein Verrastungselement 9, das an einem Schnapphaken 10 angeordnet ist. Der Schnapphaken 10 kann in Querrichtung - quer zur Längsachse 6 - elastisch verformt werden. Dies ermöglicht es, das Verrastungselement 9 in der Endposition des Filterelementes 1 im Filtergehäuse mit einem Gegenrastelement am Filtergehäuse zu verrasten, so dass in Richtung der Längsachse 6, insbesondere entgegen der Einschubrichtung, eine formschlüssige Verrastung gegeben ist. Die Verrastungsposition wird eingenommen, indem sich der Schnapphaken bei der Einschubbewegung geringfügig elastisch verformt und in der Endposition seine Ausgangsstellung wieder einnimmt, in der das Verrastungselement 9 seine Rastposition einnimmt.

An beiden gegenüberliegenden Schmalseiten befindet sich jeweils ein Schnapphaken 10 mit daran angeordnetem Verrastungselement 9.

An der den Schnapphaken 10 axial gegenüberliegenden Stirnseite befindet sich ein umlaufender Stutzen 11, der einteilig mit dem Trägerkörper 4 ausgebildet ist und axial über den Trägerkörper sowie die Filtermediumkörper 2, 3 hinausragt. In montierter Position wirkt der Stutzen 11 mit einem gehäuseseitigen Dichtungselement zusammen, über den Stutzen 11 erfolgt die axiale Abströmung des im Strömungsraum 5 aufgenommenen, gereinigten Fluids.

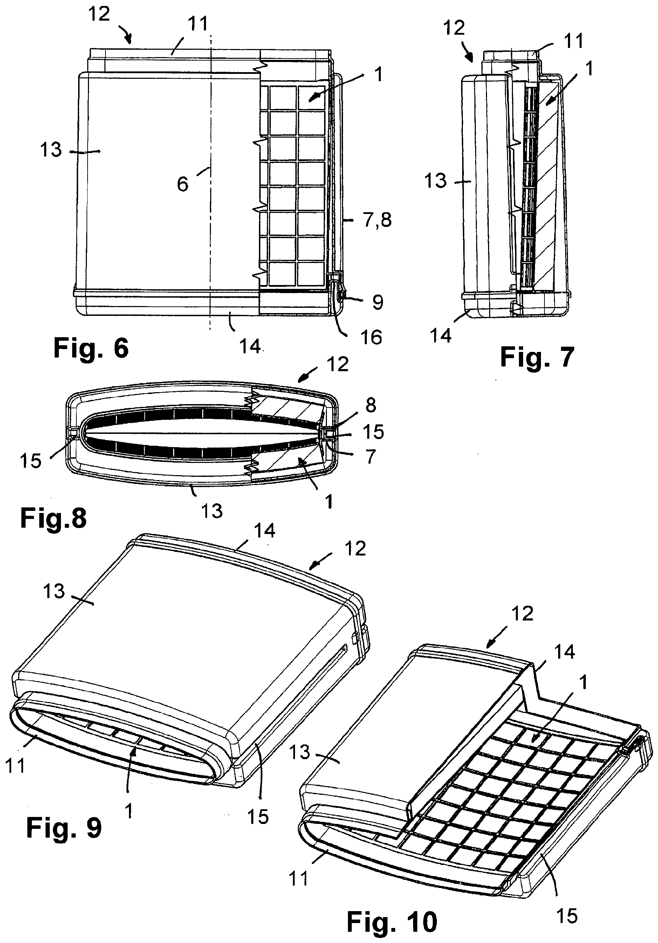

In den Fig. 6 bis 10 ist eine Filtereinrichtung 12 mit dem Filterelement 1 gemäß den Fig. 1 bis 5 in einem aufnehmenden Filtergehäuse 13 und einem Deckel 14 dargestellt. Der Stutzen 11 am Trägerkörper des Filterelementes 1 ragt aus dem aufnehmenden Filtergehäuse 13 axial heraus. Im Bereich der Schmalseiten befindet sich am Filtergehäuse 13 ein nach innen gerichteter Vorsprung 15 an beiden gegenüberliegenden Seiten des Filtergehäuses, der in den Zwischenraum zwischen den beiden annähernd parallel verlaufenden Führungsschienen 7 und an der Schmalseite des Trägerkörpers 4 einragt. Der Vorsprung 15 bildet das Gegenführungselement zur Führung und Sicherung des Filterelementes 1 im Filtergehäuse 13. Bei der Montage wird das Filterelement 1 mit dem Stutzen 11 voran in das aufnehmende Filtergehäuse 13 eingeführt.

Auf der dem Stutzen 11 zugewandten Seite weisen die benachbart verlaufenden Führungsschienen 7 und 8 einen größeren Abschnitt zueinander auf als auf der gegenüberliegenden Seite, so dass der Beginn der Einschubbewegung auf den Vorsprung 15, der über seine axiale Länge eine konstante Breite aufweist, mit geringer oder keiner Reibung erfolgt. Je weiter das Filterelement 1 in das Filtergehäuse 13 eingeführt wird, umso mehr verjüngt sich der Abstand zwischen den Führungsschienen 7 und 8, so dass die Führungsschienen unmittelbar in Anlage an den Vorsprung 15 gelangen und eine entsprechende Reibkraft aufgebaut wird.

In der endgültigen Position ragt der Stutzen 11, der am Trägerkörper 4 angeordnet ist, durch eine bodenseitige Ausnehmung in dem Filtergehäuse 13 hindurch. Auf der gegenüberliegenden Seite kann der Deckel 14 auf das Filtergehäuse 13 aufgesetzt werden. Das Verrastungselement 9 an dem Schnapphaken, der am Trägerkörper 4 angeordnet ist, gelangt in Endposition des Filterelementes in eine Rastposition mit einem gehäuseseitigen Gegenverrastungselement. Dieses Gegenverrastungselement kann ggf. von der offenen Stirnseite des Filtergehäuses 13 gebildet sein. Es ist aber auch möglich, an der Innenwand des Filtergehäuses ein entsprechendes Gegenverrastungselement vorzusehen, in das das Verrastungselement 9 am Trägerkörper 4 einrastet.

Zur Sicherung der Rastposition befindet sich an der Deckelinnenseite ein stift- oder zapfenförmiger Vorsprung 16, der unmittelbar an dem Schnapphaken 10 anliegt und hierdurch eine elastische Querbewegung des Schnapphakens 10 verhindert, mit der der Schnapphaken 10 und das Verrastungselement 9 in Außerrastposition gelangen könnten. Der Vorsprung 16 an der Deckelinnenseite sichert somit die Rastposition des Filterelementes 1.

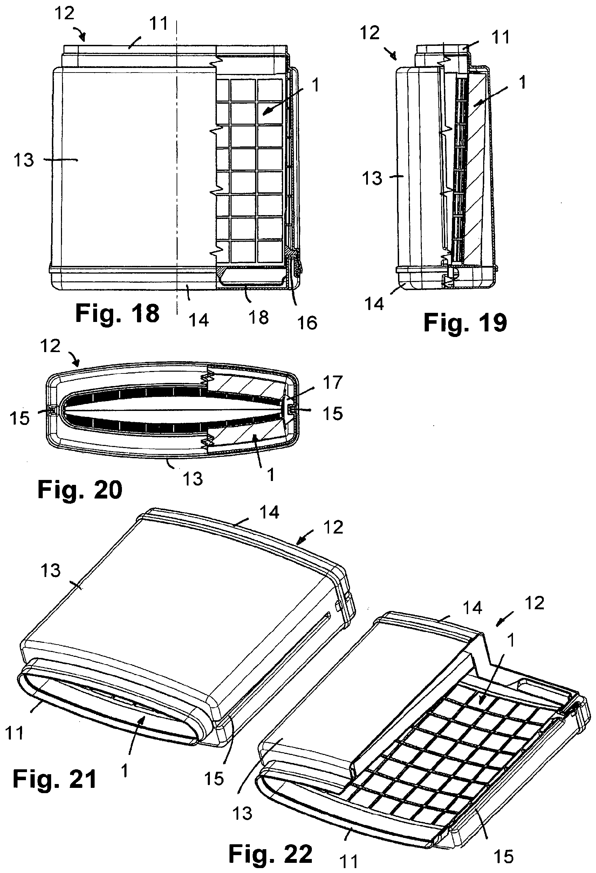

Die Fig. 11 bis 17 zeigen ein nicht erfindungsgemäßes Filterelement 1 in einer Ausführungsvariante, die Fig. 18 bis 22 zeigen eine nicht erfindungsgemäße Filtereinrichtung 12 mit einem entsprechenden Filterelement 1. Der Aufbau des Filterelementes 1 mit zwei geringfügig konvex nach außen gekrümmten Filtermediumkörpern 2 und 3 an den Längsseiten eines als Stützgerüst ausgeführten Trägerkörpers 4, der einen annähernd elliptischen oder ovalen Querschnitt aufweist, entspricht demjenigen nach dem ersten Ausführungsbeispiel.

An den gegenüberliegenden Schmalseiten befinden sich an dem Trägerkörper 4 als Führungselemente Führungslamellen 17, die U-förmig bzw. C-förmig ausgebildet sind. Über die axiale Länge verteilt sind mehrere, parallel angeordnete Führungslamellen 17 an jeder Schmalseite des Trägerkörpers 4 angeordnet. In den Zwischenraum zwischen den Führungslamellen 17 ragt im montierten Zustand der nach innen gerichtete Vorsprung 15 am Filtergehäuse 13 ein. Da über die axiale Länge mehrere Führungslamellen 17 am Trägerkörper des Filterelementes 1 angeordnet sind, ist entsprechend auch über die axiale Länge des Filterelementes eine Führung an dem Vorsprung 15 gewährleistet.

An der dem Stutzen 11 gegenüberliegenden Seite sind zwei Griffe 18 am Trägerkörper 4 angeordnet, die einteilig mit dem Trägerkörper ausgebildet sind. An den Außenseiten jedes Griffes 18 ist ein Verrastungselement 9 angeformt, das im montierten Zustand vorzugsweise an der freien Stirnseite des Filtergehäuses 13 in einer Rastposition anliegt. Die Griffe 18 können sich elastisch verformen, so dass die Rastposition durch Verformung erreicht und die Rastposition selbst sicher beibehalten wird, in der das Filterelement 1 gegen ein unbeabsichtigtes axiales Lösen aus dem Filtergehäuse 13 gesichert ist.

Wie insbesondere den Fig. 16 und 17 zu entnehmen, ist in jeden Griff 18 benachbart zu dessen Außenseite eine Ausnehmung 19 eingebracht, die in Nachbarschaft zu dem Verrastungselement 9 liegt. Bei aufgesetztem Deckel 14 ragt der Vorsprung 16 an der Deckelinnenseite (Fig. 18) in die Ausnehmung 19 im Griff 18 ein und verhindert dadurch, dass sich der Griff 18 elastisch verformt und das Verrastungselement 9 versehentlich in die Außerrastposition gelangt. Bei aufgesetztem Deckel 14 ist somit eine sichere, unlösbare Verrastung gewährleistet.

Zum Entnehmen des Filterelementes 1 wird der Deckel 14 abgenommen, anschließend wird das Filterelement 1 an den Griffen 18 aus dem Filtergehäuse 13 herausgehoben. Hierbei können sich die Griffe 18 elastisch verformen, wodurch das Verrastungselement 9 in die Außerrastposition gelangt und eine Entnahme des Filterelementes 1 aus dem Filtergehäuse möglich ist.

In Fig. 23 ist die Ausnehmung 19 im Griff 18, der am Trägerkörper angeformt ist, in vergrößerter Darstellung zu erkennen. Die Ausnehmung 19 erstreckt sich über den Randbereich des Griffes 18 und somit zum Teil in dem seitlichen Bereich, in welchem sich auch das Verrastungselement 9 am Griff 18 befindet, und zum Teil im oben liegenden Bereich an der Stirnseite des Filterelementes. Der größere Abschnitt der Ausnehmung 19 liegt am oberen, stirnseitigen Bereich. Die Ausnehmung 19 weist einen quadratischen oder leicht rechteckigen Querschnitt auf.

Wie der Innenansicht des Deckels 14 gemäß Fig. 24 zu entnehmen, befinden sich die stiftförmigen Vorsprünge 16, die bei aufgesetztem Deckel in die Ausnehmungen 19 an den Griffen 18 einragen, an gegenüberliegenden Schmalseiten des Deckels. Die Vorsprünge 16 ragen axial über den unteren Deckelrand hinaus. Die Vorsprünge 16 weisen einen an die Ausnehmung 19 angepassten Querschnitt auf, im Ausführungsbeispiel ist der Querschnitt der Vorsprünge 16 quadratisch oder leicht rechteckig.

## Patentansprüche

1. Filterelement, insbesondere zur Gasfiltration, mit zumindest zwei Filtermediumkörpern (2, 3), die an einem Trägerkörper (4) angeordnet sind, die einen zwischenliegenden Strömungsraum (5) für ein Fluid begrenzen, **dadurch gekennzeichnet, dass** am Trägerkörper (4) an gegenüberliegenden Seiten jeweils zwei Führungselemente (7, 8) zur Führung des Filterelements (1) in Einschubrichtung in einem aufnehmenden Filtergehäuse (13) angeordnet sind, wobei die Führungselemente als parallel oder annähernd parallel verlaufende Führungsschienen (7, 8) ausgebildet sind, die sich annähernd oder vollständig über die Länge des Filterelements (1) erstrecken.

2. Filterelement nach Anspruch 1, **dadurch gekennzeichnet, dass** das Führungselement (7, 8, 17) den Filtermediumkörper (2, 3) seitlich überragt.

3. Filterelement nach Anspruch 1, **dadurch gekennzeichnet, dass** das Führungselement (7, 8, 17) sich seitlich nicht weiter nach außen erstreckt als der Filtermediumkörper (2, 3).

4. Filterelement nach einem der Ansprüche 1 bis 3, **dadurch gekennzeichnet, dass** der Filtermediumkörper (2, 3) mindestens abschnittsweise gekrümmt ausgebildet ist.

5. Filterelement nach einem der Ansprüche 1 bis 4, **dadurch gekennzeichnet, dass** am Trägerkörper (4) ein Verrastungselement (9) zur Verrastung mit dem Filtergehäuse (13) angeordnet ist.

6. Filterelement nach Anspruch 5, **dadurch gekennzeichnet, dass** das Verrastungselement (9) an einem verformbaren Schnapphaken (10) gebildet ist, der am Trägerkörper (4) angeordnet ist.

7. Filtereinrichtung mit einem Filterelement (1) nach einem der Ansprüche 1 bis 6 und mit einem Filtergehäuse (13) zur Aufnahme des Filterelements (1), wobei im Filtergehäuse (13) ein Gegenführungselement (15) angeordnet ist, das mit den Führungselementen (7, 8) des Trägerkörpers (4) in Eingriff steht.

8. Filtereinrichtung nach Anspruch 7, **dadurch gekennzeichnet, dass** die Filtereinrichtung einen Deckel (14) aufweist, welcher auf das Filtergehäuse (13) aufsetzbar ist, und hierbei ein Verrastungselement (9) am Trägerkörper (4) in der Verrastungsposition sichert.

9. Filtereinrichtung nach Anspruch 8, **dadurch gekennzeichnet, dass** an der Innenseite des Deckels (14) ein Vorsprung (16) angeordnet ist, der am Verrastungselement (9) anliegt und das Verrastungselement (9) am Trägerkörper (4) in der Verrastungsposition sichert.

## Claims

1. Filter element, in particular for gas filtration, having at least two filter medium bodies (2, 3) which are disposed on a carrier body (4), which delimit an intermediate flow chamber (5) for a fluid, **characterized in that** at the carrier body (4) respectively two guide elements (7, 8) for guiding the filter element (1) in insertion direction in a receiving filter housing (13) are disposed on opposing sides, wherein the guide elements are designed as parallel or approximately parallel extending guide rails (7, 8) which extend approximately or completely across the length of the filter element (1).

2. Filter element according to claim 1, **characterized in that** the guide element (7, 8, 17) protrudes the filter medium body (2, 3) laterally.

3. Filter element according to claim 1, **characterized in that** the guide element (7, 8, 17) does not extend further outwardly than the filter medium body (2, 3).

4. Filter element according to one of the claims 1 to 3, **characterized in that** the filter medium body (2, 3) is designed at least sectionwise in a curved manner.

5. Filter element according to one of the claims 1 to 4, **characterized in that** a locking element (9) is disposed at the carrier body (4) for locking with the filter housing (13).

6. Filter element according to claim 5, **characterized in that** the locking element (9) is formed on a deformable snap-in hook (10) which is disposed at the carrier body (4).

7. Filtering device having a filter element (1) according to one of the claims 1 to 6 and having a filter housing (13) for receiving the filter element.(1), wherein a counter guide element (15) which is engaged with the guide elements (7, 8) of the carrier body (4) is disposed in the filter housing (13).

8. Filtering device according to claim 7, **characterized in that** the filtering device features a cover (14) which can be placed on the filter housing /13), thereby securing a locking element (9) on the carrier body (4) in the locking position.

9. Filtering device according to claim 8, **characterized in that** at the interior side of the cover (14) is disposed a projection (16) which abuts against the locking element (9) and secures the locking element (9) on the carrier body (4) in the locking position.

## Revendications

1. Élément filtrant, notamment destiné à la filtration de gaz, ayant au moins deux corps de milieu filtrant (2, 3) qui sont disposés sur un corps de support (4), qui délimitent un espace d'écoulement intermédiaire (5) pour un fluide, **caractérisé en ce que** sur le corps de support (4) respectivement deux éléments de guidage (7, 8) pour guider l'élément filtrant (1) dans la direction d'insertion dans un boîtier de filtre récepteur (13) sont disposés sur des côtés opposés, les éléments de guidage étant conçus en tant que rails de guidage (7, 8) parallèles ou approximativement parallèles qui s'étendent approximativement ou complètement sur la longueur de l'élément filtrant (1).

2. Élément filtrant selon la revendication 1, **caractérisé en ce que** l'élément de guidage (7, 8, 17) dépasse latéralement du corps de milieu filtrant (2, 3).

3. Élément filtrant selon la revendication 1, **caractérisé en ce que** l'élément de guidage (7, 8, 17) ne s'étend pas latéralement plus loin vers l'extérieur que le corps de milieu filtrant (2, 3).

4. Élément filtrant selon l'une des revendications 1 à 3, **caractérisé en ce que** le corps de milieu filtrant (2, 3) est conçu au moins dans certaines sections de manière courbée.

5. Élément filtrant selon l'une des revendications 1 à 4, **caractérisé en ce qu'**un élément d'encliquetage (9) est disposé sur le corps de support (4) pour l'encliquetage avec le boîtier de filtre (13).

6. Élément filtrant selon la revendication 5, **caractérisé en ce que** l'élément d'encliquetage (9) est formé sur un crochet d'encliquetage déformable (10) qui est disposé sur le corps de support (4).

7. Dispositif de filtration ayant un élément filtrant (1) selon l'une des revendications 1 à 6 et ayant un boîtier de filtre (13) pour recevoir l'élément filtrant (1), un élément de contre-guidage (15) qui est en prise avec les éléments de guidage (7, 8) du corps de support (4) étant disposé dans le boîtier de filtre (13).

8. Dispositif de filtration selon la revendication 7, **caractérisé en ce que** le dispositif de filtration présente un couvercle (14) qui peut être placé sur le boîtier de filtre (13), fixant ainsi un élément d'encliquetage (9) sur le corps de support (4) dans la position d'encliquetage.

9. Dispositif de filtration selon la revendication 8, **caractérisé en ce que** sur la face intérieure du couvercle (14) est disposée une saillie (16) qui touche l'élément d'encliquetage (9) et fixe l'élément d'encliquetage (9) sur le corps de support (4) dans la position d'encliquetage.
